# FASCICULE DE BREVET EUROPEEN

(11) **EP 2 236 354 B1**
(45) Date de publication et mention de la délivrance du brevet: **21.03.2012**
(21) Numéro de dépôt: 10159061.0
(22) Date de dépôt: 02.04.2010
(51) Int. Cl.: B60P 3/22

(54) **Véhicule citerne autoporté**
Selbsttragendes Tankfahrzeug
Self-supporting tanker

(30) Priorité: 03.04.2009 FR 0901647
(43) Date de publication de la demande: 06.10.2010
(73) Titulaire: Etablissements MAGYAR, 21000 Dijon (FR)
(72) Inventeur: Magyar, Daniel, 75012, PARIS (FR); Magyar, Laurent, 75001, PARIS (FR)
(74) Mandataire: Novagraaf Technologies

(56) Documents cités:
- FR-A- 2 715 385
- GB-A- 1 591 303
- US-A- 3 158 383
- US-A1- 2004 031 793

## Description

### DOMAINE TECHNIQUE DE L'INVENTION

L'invention se rapporte au domaine des véhicules citernes autoportés selon le préambule de la revendication 1. Par « véhicule citerne autoporté », on entend un véhicule citerne tracté comportant un corps de citerne pourvu d'une attache de traction et supporté par au moins un train de roue. Un tel véhicule citerne ne comporte pas de châssis continu et les efforts de traction sont transmis de l'attache de traction vers le train de roues par l'intermédiaire du corps de citerne. Un tel véhicule citerne forme par exemple une citerne semi-remorque ou remorque pour le transport de produits gazeux, liquides, pâteux ou pulvérulents. Un tel véhicule est connu du document US 3158383 A.

### ETAT DE LA TECHNIQUE ANTERIEURE

Généralement, les véhicules citernes autoportés comportent un corps de citerne en d'acier inoxydable. Ce corps de citerne est pourvu d'une attache de traction et il est supporté par au moins un train de roues. Les forces de traction sont transmises de l'attache de traction au train de roues par l'intermédiaire du corps de citerne en acier inoxydable. Une telle citerne est par exemple décrite dans le document EP06105167. Ces citernes en acier doivent être conçues pour être particulièrement résistantes, à la fois vis-à-vis de la passion due au fluide transporté, mais aussi vis-à-vis des forces de traction. Par ailleurs, l'acier est très avantageux puisqu'il peut être mis en contact avec des denrées alimentaires-sans qu'il n'y ait de risque de contamination.

Cependant, les citernes en acier sont très lourdes et elles isolent mal thermiquement les produits transportés.

On connaît par ailleurs des véhicules citernes autoportés dont le corps de citerne est constitué en matériau composite. Un tel véhicule est décrit par exemple dans le document EP0698526. Dans ce document, le véhicule citerne comporte un réservoir horizontal qui est fabriqué en un matériau composite renforcé par des fibres et inséré dans un logement en forme de conque, également réalisé en un matériau composite renforcé par des fibres. La citerne se distingue par sa légèreté. Toutefois, la fabrication d'une telle citerne se révèle particulièrement complexe en égard à la taille du réservoir horizontal et à la taille de la coque.

Le document US3158383 décrit également un véhicule citerne autoporté dont le corps de citerne, qui transmet sans l'aide d'un châssis les efforts de traction et supporte les efforts de flexion et de pression, est composé d'un matériau composite. Cependant, ce corps de citerne est fabriqué d'un seul tenant et par conséquent, les dimensions de ce corps de citerne compliquent sa fabrication.

L'art antérieur connaît également le document US4292898 qui décrit un wagon citerne autoporté comportant un corps de citerne en matériau composite. Lors de la fabrication de ce corps de citerne, les fibres sont enroulées sur un mandrin reproduisant la forme du corps de citerne. Puis le corps de citerne est découpé suivant un axe longitudinal du corps de citerne pour pouvoir retirer le mandrin. Les deux moitiés du corps de citerne sont ensuite rassemblées. Cependant, ces deux moitiés ont la même longueur que le corps de citerne et par conséquent, elles ont des dimensions longitudinales très importantes qui compliquent leur fabrication et leur manipulation.

On connaît également le document FR2715385 qui décrit une cuve modulaire de grand module en polypropylène ou polyéthylène constituée d'une pluralité de modules centraux présentant chacun au moins une extrémité ouverte pourvue d'une saisie annulaire, les modules étant reliés entre eux par intermédiaire d'un profilé annulaire qui est intercalé entre les deux saillies de deux modules successifs. Cependant une telle cuve n'est pas autoportée et elle n'est pas conçue pour transmettre des efforts de traction. En particulier, les interfaces entre deux jonctions sont conçues pour être étanches et pour résister à la pression mais elles ne sont pas assez résistantes pour transmettre des efforts de traction.

### EXPOSE DE L'INVENTION

L'invention vise à remédier aux inconvénients de l'état de la technique en proposant un véhicule citerne autoporté en matériau composite ne nécessitant pas la fabrication de pièces de longueur trop importantes.

Plus précisément, l'invention concerne un véhicule citerne tracté comportant un corps de citerne s'étendant suivant un axe longitudinal, pourvu d'une attache de traction et supporté par au moins un train de roues situé longitudinalement à distance de l'attache de traction, dans lequel le oorps de citerne comporte une pluralité de tronçons comportant chacun au moins une paroi annulaire en matériau composite monolithique, les forces de traction étant transmises de l'attache de traction au train de roues par l'intermédiaire d'au moins deux des tronçons.

Dans un tel véhicule citerne dit « autoporté », les efforts de traction sont transmis directement de l'attache de traction au train de roues par l'intermédiaire d'au moins deux des tronçons. Les efforts de traction sont transmis par intermédiaire des parois annulaires en matériau composite. Le corps de citerne transmet donc les efforts de traction, sans passer par un châssis continu et il les transmet par l'intermédiaire de plusieurs tronçons, tandis que dans l'art antérieur les efforts étaient transmis par une pièce d'un seul tenant

Le corps de citerne est constitué de plusieurs tronçons aux dimensions longitudinales limitées, ce qui facilite sa fabrication. En effet, les véhicules citernes peuvent avoir des dimensions longitudinales importantes, par exemple supérieures à 10 m, et c'est pourquoi il est important de pouvoir les réaliser en plusieurs tronçons. Ce découpage en tronçons permet également de réaliser des véhicules citernes dont les dimensions longitudinales sont variées, à partir de tronçons de taille standard. En outre, un tel véhicule citerne tracté permet un gain de poids par rapport aux véhicules citernes en acier.

Avantageusement, les tronçons en matériaux composites sont séparés suivant des plans perpendiculaires à l'axe longitudinal, de sorte à faciliter leur stockage et leur montage.

Par « matériau composite », on entend ici tout type de matériau hétérogène comportant une matrice, un renfort de fibres, tissées ou non et un ensimage protégeant les fibres. En particulier, on vise ici les matériaux composites à matrice organique constituée, par exemple, d'une résine polyester, vinylester, époxyde ou de résine phénolique si l'application nécessite une tenue particulière au feu, de résine thermoplastiques comme par exemple le polypropylène ou le polyamide. Par soucis pour l'environnement, on peut également envisager des résines et des fibres végétales. Le renfort peut être constitué de fibres tissées ou non, et notamment de fibres de verre, de carbone, d'aramide, de fibres végétales.

La paroi annulaire en matériau composite ne comporte de préférence pas de métaux.

Chaque tronçon est de préférence composé d'une structure sandwich, elle-même constituée d'une paroi extérieure et d'une paroi intérieure en matériau composite, entre lesquelles est intercalée une mousse dans le cas où le corps de la citerne nécessite une isolation thermique. Dans le cas où le contenu de la citerne est non sensible à des variations de température, chaque tronçon peut-être simplement constitué d'une paroi extérieure et d'une paroi intérieure en matériau composite.

Les parois intérieures et extérieures en matériau composite garantissent la résistance mécanique des tronçons, à la fois vis-à-vis de la pression du fluide transporté par le véhicule citerne, mais aussi vis-à-vis des forces de traction transmises par certains tronçons, de l'attache de traction au train de roues.

Par « mousse », on entend un matériau expansé, par exemple de type mousse polyuréthane. La mousse permet d'isoler thermiquement le véhicule citerne, mais aussi d'améliorer la rigidité des tronçons. Elle permet en particulier d'améliorer la résistance des parois en flexion et leur résistance à la pression.

Avantageusement, le matériau composite constituant les parois extérieure et intérieure comporte :
- un renfort fibreux tissé ou non constitué d'un matériau pris dans le groupe suivant : carbone, verre, carbure de silicium, aluminium, aramide, fibres végétales par exemple;
- une matrice constituée d'un matériau pris dans le groupe suivant : résine polyester, résine vinylester, résine epoxyde, phénolique résine thermoplastiques, polypropylène, polyamide, par exemple.

Le renfort de fibres comporte des fils de chaîne et des fils de trame, les fils de chaîne et les fils de trame étant orientés ou étant constitué d'une succession de couches unidirectionnelles, la chaîne étant assimilable à l'axe longitudinal, la trame à la direction circonférentielle.

Les renforts peuvent être constitués de différents types de tissus tissés (UD, sergé, taffetas par exemple) ou de non tissés ou même de tricots.

Par « fils de chaîne » et «fils de trame », on entend des paquets de filaments qui sont assemblés entre eux pour former une mèche. Ces mèches peuvent par exemple être torsadées entre elles mais tout autre procédé d'assemblage des mèches peut être utilisé.

Les différents tronçons du véhicule citerne sont de préférence assemblés par collage et boulonnage. En associant collage et boulonnage, l'assemblage des tronçons est suffisamment résistant pour transmettre les forces de traction et de freinage suivant la direction longitudinale.

Suivant différents modes de réalisation :
- le boulonnage est parallèle à l'axe longitudinal du véhicule ;
- chaque tronçon comporte deux extrémités longitudinales, des inserts étant insérés dans la mousse de chacune des extrémités, les inserts de deux tronçons adjacents étant boulonnés entre eux. Ainsi les inserts sont-ils prisonniers de la mousse et enrobés de renforts fibreux, ce qui leur permet de résister à l'arrachement lors de la transmission des forces de traction. Afin de répartir les efforts exercés sur chaque insert, les inserts sont de préférence répartis sur la circonférence des extrémités de chaque tronçon.

Avantageusement, le corps de citerne comporte au moins deux types de tronçons différents:
- des caissons, et
- des jonctions intermédiaires,
les caissons et les jonctions intermédiaires étant disposés de telle sorte qu'une jonction intermédiaire se trouve entre deux caissons successifs.

Avantageusement, au moins une des jonctions intermédiaires est porteuse d'une cloison s'étendant suivant un plan perpendiculaire à l'axe longitudinal, la cloison formant une fermeture hermétique ou non entre deux caissons.

Les caissons, qui présentent des dimensions longitudinales importantes, sont standards, tandis que les jonctions, qui présentent préférentiellement de plus petites dimensions longitudinales et qui sont donc plus simples à fabriquer, peuvent comporter ou non une cloison. L'agencement du corps de la citerne peut ainsi varier, à partir d'un nombre limité de modules élémentaires, ces modules élémentaires étant relativement simples à fabriquer. Par exemple, on peut ainsi choisir le nombre de compartiments présents dans le véhicule citerne, ainsi que leurs dimensions longitudinales.

Avantageusement, les caissons sont pourvus d'inserts, les jonctions intermédiaires étant pourvues d'inserts complémentaires et de cavités, chaque cavité étant placée derrière un insert complémentaire. Les inserts des caissons viennent s'emboîter dans les inserts complémentaires des jonctions intermédiaires, ce qui permet un meilleur accrochage des caissons et des jonctions complémentaires. En outre, la réalisation des caissons et des jonctions est facilitée puisque un seul type d'insert est monté sur toutes les jonctions intermédiaires, et un seul type d'insert est monté sur tous les caissons. Chaque cavité permet d'avoir accès à la face arrière de l'insert complémentaire correspondant afin d'y introduire une vis ou un goujon, parallèle à l'axe longitudinal, qui traverse l'insert complémentaire et le fixe à l'insert du caisson correspondant. L'ouverture sert également à immobiliser le goujon ou la vis. Ces cavités peuvent ensuite être rebouchées avec de la mousse, afin d'éviter que la jonction intermédiaire ne présente de zone de faiblesse mécanique ou thermique. Ces cavités servent uniquement à la fixation des tronçons entre eux.

Suivaht un mode de réalisation particulier, le corps de citerne comporte deux extrémités longitudinales, une jonction porteuse d'une cloison hermétique étant placée à chaque extrémité longitudinale du corps de citerne. Les jonctions intermédiaires, porteuses de cloisons transversales, permettent donc de-séparer le corps de citerne en différents compartiments, et les jonctions porteuses de la cloison hermétique permettent de fermer le corps de citerne à chacune de ces extrémités. Ces jonctions intermédiaires porteuses de cloisons constituent donc dans ce mode de réalisation des fonds de citerne. Le nombre d'éléments constitutifs de la citerne est ainsi réduit.

Préférentiellement, le corps de citerne comporte au moins deux caissons identiques afin de réduire le nombre d'éléments nécessaires à la fabrication d'un corps de citerne. Il peut notamment s'agir de tronçons médians cylindriques.

Avantageusement, au moins un des caissons comporte un trou d'homme pour permettre l'accès à l'intérieur du corps de-citerne. Lorsque le corps de citerne comporte plusieurs compartiments, chaque compartiment peut comporter un caisson avec un trou d'homme pour permettre l'accès à chaque compartiment Avantageusement, au moins un des caissons comporte au moins un trou de vidange.

Un tronçon annulaire on matériau composite pour un véhicule-citerne selon un des modes de réalisation précédentes comporte au moins une paroi annulaire en matériau composite et présente deux extrémités longitudinales annulaires présentant chacune des interfaces de fixation mécanique.

La paroi annulaire en matériau composite comporte de préférence au moins un tissu de fibres imprégné d'une matrice de résine, le tissu de fibres comportant au moins des fils de chaîne et des fils de trame, les fils de chaîne et les fils de trame étant orientés selon l'une des orientations suivantes selon les axes principaux de la paroi.

Les renforts peuvent être constitués de différents types de tissus tissés (UD, sergé, taffetas par exemple) ou de non tissés ou même de tricots.

Les fibres sont de préférence constituées d'un matériau pris dans le groupe suivant : carbone, verre, carbure de silicium, aluminium, aramide, fibres végétales ou de cellulose, tandis que la matrice est de préférence constituée d'un ou plusieurs matériaux pris dans le groupe suivant : résine polyester, résine vinylester, résine epoxyde, résine phénolique, résine thermoplastique, polypropylène, polyamide, par exemple.

Avantageusement, le tronçon est constitué d'une structure sandwich comportant une paroi intérieure et une paroi extérieure entre lesquelles est intercalée une mousse, les parois intérieure et extérieure étant constituées d'un matériau composite constitué d'un tissu de fibres imprégné d'une résine. Les parois intérieure et extérieure en matériau composite confèrent une plus grande résistance mécanique à l'ensemble, et elles permettent en particulier à la paroli annulaire de résister aux sollicitations de traction, de freinage et de pression. La mousse permet de renforcer la résistance de la paroi annulaire à la pression et elle permet également de rigidifier en flexion les parois ainsi que d'assurer l'isolation thermique de la citerne.

Chaque interface de fixation est de préférence constituée d'une pluralité d'inserts, les inserts étant répartis sur la circonférence de chacune des extrémités longitudinales des tronçons. Cette répartition des inserts sur la circonférence de chacune des extrémités longitudinales des tronçons permet de répartir les charges entre ies inserts afin d'éviter leur arrachement

Chaque insert comporte de préférence un trou parallèle à l'axe longitudinal et une surface d'appui perpendiculaire à l'axe longitudinal. Le trou parallèle à l'axe longitudinal est destiné à recevoir une vis permettant de réunir deux inserts par boulonnage. La surface d'appui est destinée à venir en appui sur la surface d'appui d'un insert complémentaire. Lorsque deux inserts sont assemblés par collage, la colle utilisée est repartie sur cette surface d'appui.

Avantageusement, les inserts d'un tronçon ont une forme de tenon -conçu pour s'insérer dans les inserts d'un tronçon adjacent qui ont une forme de mortaise. Ce système de tenon/mortaise permet un emboîtement optimum.

Le tronçon annulaire peut également comporter un trou d'homme. Ce trou d'homme est constitué d'un orifice creusé dans la paroi annulaire qui permet à un opérateur d'avoir accès à l'intérieur du tronçon en cas de besoin.

Le trou d'homme comporte de préférence un rebord en matériau composite qui est cerclé par un ou plusieurs cercles métalliques. Le cerclage métallique permet de renforcer la résistance mécanique du rebord en matériau composite. Par ailleurs, le système de fermeture du trou d'homme est de préférence fixé à ce cerclage métallique afin de ne pas fragiliser la paroi du tronçon en matériau composite.

### BREVE DESCRIPTION DES FIGURES

D'autres caractéristiques et avantages de invention ressortiront à la lecture de la description qui suit, en référence aux figures annexées, qui illustrent :
- la figure 1, une vue de côté d'un véhicule citerne tracté selon un premier mode de réalisation de l'invention, le véhicule citerne comportant au moins un trou d'homme;
- la figure 2, une vue de côté d'un corps de citerne selon un second mode de réalisation de l'invention, ie corps de citerne comprenant trois jonctions intermédiaires et deux caissons en cours d'assemblage ;
- la figure 3, une vue de côté du corps de citerne de la figure 2 qui est assemblé ;
- la figure 4, une vue en coupe d'une des jonctions intermédiaires de la figure 2 reliée aux deux caissons qui l'entourent ;
- la figure 5, une vue en coupe en gros plan de la fixation de la jonction intermédiaire et d'un des caissons de la figure 4 ;
- la figure 6, une vue en coupe transversale d'une extrémités de la jonction intermédiaire de la figure 4.

Pour plus de clarté, les éléments identiques ou similaires sont repérés par des signes de référence identiques sur l'ensemble des figures.

### DESCRIPTION DETAILLEE D'UN MODE DE REALISATION

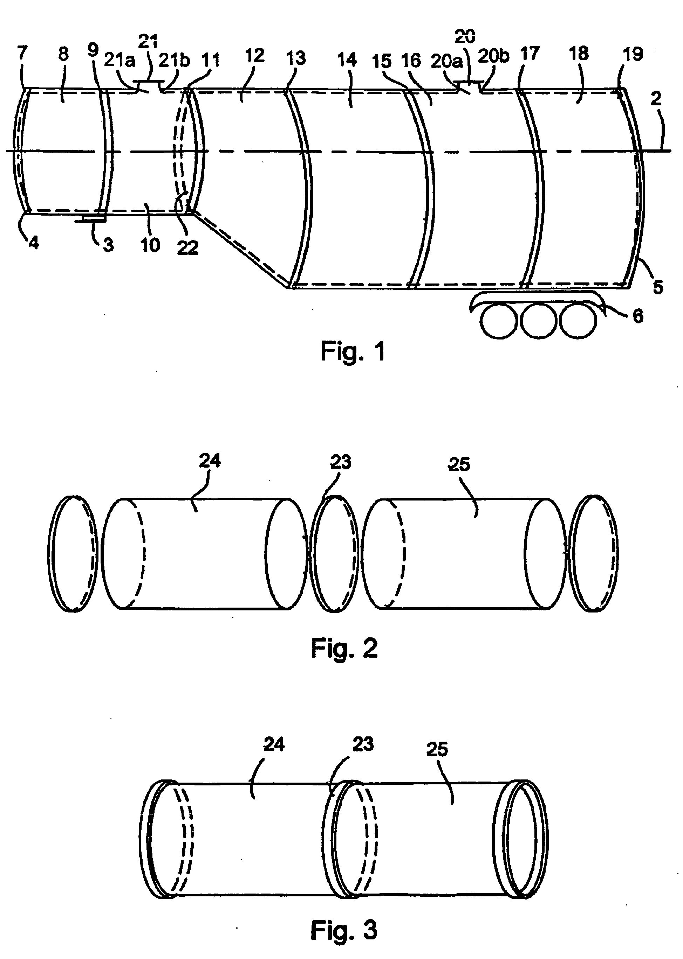

La figure 1 représente un véhicule citerne tracté selon un mode de réalisation de l'invention. Ce véhicule tracté comprend un corps de citerne 1 s'étendant suivant un axe longitudinal 2. Ce corps de citerne 1 est pourvu d'une attache de traction 3, localisée à proximité d'une première extrémité longitudinale 4 du corps de citerne. Cette attache de traction 3 permet de relier le véhicule citerne à un véhicule qui le tracte. À proximité d'une deuxième extrémité longitudinale 5, le corps de citerne 1 est supporté par un train de roues 6.

Le corps de citerne 1 est constitué d'une pluralité de tronçons 7-19 annulaires, à section constante ou variable, par exemple des tronçons cylindriques ou tronconiques, et de deux tronçons d'extrémité en calotte sphérique ou non. Les forces de traction sont transmises de l'attache de traction 3 vers le train de roues 6 par l'intermédiaire des tronçons 8 à 18.

Les tronçons 7 à 19 sont constitués chacun par une structure sandwich comprenant une paroi intérieure et une paroi extérieure entre lesquelles se trouve une couche de mousse polyuréthane. Par « paroi intérieure », on entend une paroi en contact avec le contenu de la citerne, tandis que par « paroi extérieure », on entend une paroi en contact avec le milieu environnant. La paroi intérieure comme la paroi extérieure sont composées d'un matériau composite constitué d'un tissu de fibres de carbone imprégné d'une résine.

Le tissu de fibre de carbone se compose de préférence d'au moins une nappe de fils de chaîne s'étendant sur la circonférence du tronçon, et d'au moins une nappe de fils de trame entrecroisés, s'étendant dans la direction longitudinale de la citerne. Alternativement, on peut également envisager des fils de chaîne longitudinaux et des fils de trames circonférentiels, ou des fils de trame et de chaîne formant des hélices entrecroisées avec un angle de d'hélice de 45° par exemple. Chaque fil de chaîne ou de trame est constitué d'un paquet de fibres, chaque fibre étant réalisée en carbone dans cet exemple. Les fibres sont par exemple torsadées entre elles pour former un paquet de fibres cohérent Ce tissu de fibres est imprégné d'une résine époxy. On peut le cas échéant envisager plusieurs nappes de tissus superposées

Le drapage des parois intérieure de chaque tronçon est réalisé par enroulement filamentaire sur un mandrin ou / et par voie manuelle ou mécanisée. La mousse isolante est ensuite placée sur le drapage à des fins d'enrobage. Le drapage de la paroi extérieure est réalisé en dernier lieu. L'outillage est enfin fermé sur les différentes couches précédemment placées. Puis la résine est injectée par injection sur renfort en moule fermé (Resin tranfer moulding ou RTM).

Le matériau obtenu est recouvert d'un voile de surface et d'un enduit gélifié. Le voile de surface et l'enduit gélifié peuvent recouvrir une seule face de chaque paroi ou alors ses deux faces. Le gel-coat et le voile permettent d'éviter la contamination des produits transportés par le véhicule citerne par la paroi. Leur principale fonction est l'inertie chimique, l'étanchéité et l'aspect de surface

A titre indicatif, chaque paroi a de préférence une épaisseur comprise entre 3 et 10 mm. La couche de mousse à une épaisseur comprise entre 0 est 150 mm, de préférence égale à 100 mm. Une telle structure sandwich en matériau composite est légère tout en étant résistante mécaniquement. Plus généralement, la structure doit être suffisamment résistante pour transmettre les forces de traction et de freinage et pour résister à la pression et au poids des matériaux transportés par le véhicule citerne, ainsi qu'aux sollicitations dynamiques dues au mouvement des matériaux transportés dans le corps de citerne lors du transport

Parmi les tronçons 7 à 19, on trouve des caissons 8, 10, 12, 14, 16 et 18. Ces caissons sont cylindriques ou tronconiques et ils présentent des dimensions longitudinales relativement importantes. Ces dimensions longitudinales sont comprises ici entre 1 et 2 m.

Les caissons 16 et 10 comprennent chacun un trou d'homme 20 ou 21 afin de permettre l'accès à l'intérieur du corps de la citerne. Le trou d'homme comprend de façon connue un trou de visite 20a, 21 a qui traverse la paroi annulaire des caissons 18 et 10. Ce trou de visite est entouré d'une paroi cylindrique 20b, 21 b qui est constituée du même matériau que celui qui compose la paroi des caissons 16, 10. Le trou d'homme 20, 21 est moulé en même temps que le caisson 16, 10. La paroi cylindrique est ensuite cerclée par un cercle métallique qui permet de renforcer sa structure. Par ailleurs, un système de fermeture du trou d'homme est relié au trou d'homme par l'intermédiaire de ce cercle métallique. Par exemple, un couvercle et sa charnière peuvent être fixés sur le cercle métallique. Le corps de citerne en matériau composite peut ainsi être équipée des mêmes trous d'homme que les corps de citerne classiques, en acier, sans que la paroi du corps de citerne en matériau composite ne soit fragilisée.

De la même manière, les caissons peuvent comporter, en partie basse, des trous de vidange et autres piquages.

Entre deux caissons, se trouve une jonction intermédiaire 9, 11, 13, 15 ou 17. Chaque jonction intermédiaire a une largeur ou une longueur comprise entre 15 et 30 cm. Ces jonctions intermédiaires permettent de relier les caissons entre eux et elles peuvent comporter ou non une cloison qui s'étend suivant un pian perpendiculaire à l'axe longitudinal. La jonction 11 est par exemple porteuse d'une cloison 22 qui sépare le corpus de citerne en deux compartiments. L'accès à l'intérieur de chaque compartiment est possible grâce aux trous d'homme 20 et 21. La taille de chaque compartiment peut être facilement modifiée en ajoutant ou en retirant des caissons.

La citerne est fermée à chacune de ces extrémités longitudinales 4, 5 par des fonds de citerne qui sont formés par des jonctions 7 et 19 porteuses d'une cloison perpendiculaire à l'axe longitudinal. Ce système de jonctions et de caissons permet de réaliser des citernes et taille et d'agencement modulable à partir d'un nombre réduit d'éléments standardisés.

Les figures 2 et 3 représentent un corps de citerne avant et après assemblage des jonctions et des caissons. Ce corps de citerne comporte notamment une jonction intermédiaire 23 entre deux caissons 24 et 25. Ces trois tronçons 23, 24 et 25 sont cylindriques.

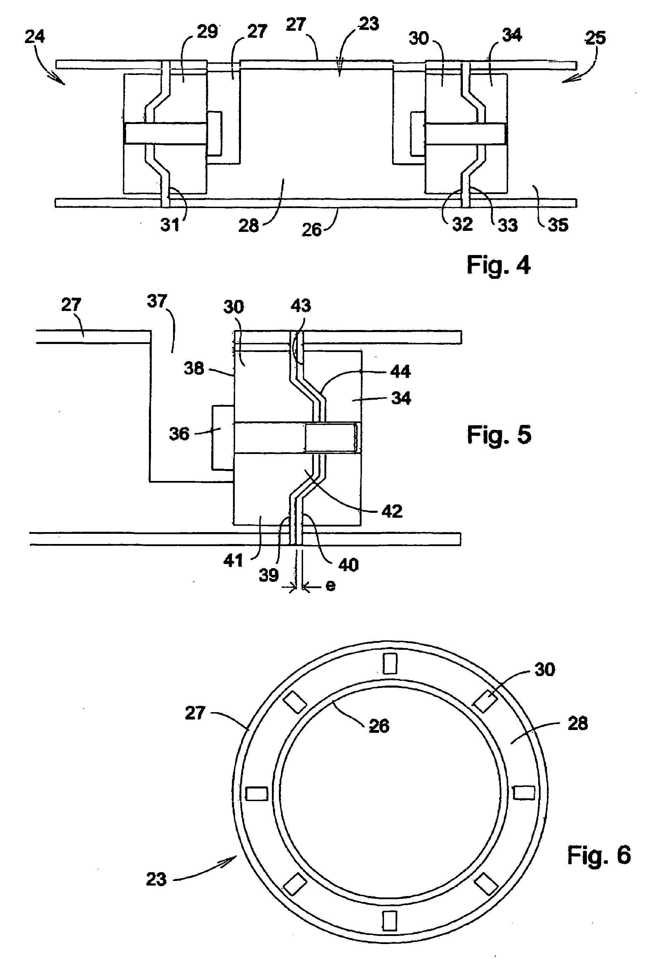

L'assemblage d'une jonction intermédiaire 23 entre deux caissons 24 et 25 est représenté plus précisément sur la figure 4. La jonction 23 comporte une paroi intérieure 26 et une paroi extérieure 27 entre lesquelles est intercalée une couche de mousse de polyuréthane 28.

La jonction intermédiaire 23 présente deux extrémités longitudinales 31 et 32. L'extrémité longitudinale 32 de la jonction 23 est représentée, en coupe transversale, sur la figure 6. Dans la mousse 28 de l'extrémité longitudinale, sont insérés des inserts complémentaires 30. Ces inserts complémentaires 30 sont prisonniers de la mousse 28 et de l'enrobage fibreux afin d'empêcher leur arrachement lorsqu'ils transmettent les efforts de traction. Les inserts complémentaires sont repartis, à intervalle régulier ou non, sur la circonférence de l'extrémité 32. Afin de repartir les efforts exercés sur chacun des inserts, et afin d'éviter leur arrachement, il est préférable d'avoir le maximum d'inserts dans les extrémités. Les inserts sont placés dans la mousse lors du drapage des caissons, de préférence avant injection de la résine. Après polymérisation de ia résine ies caissons sont finalisés et il suffit de les assembler entre eux par vissage et collage.

Pour cela, le caisson 25 qui est adjacent à la jonction 23 présente une extrémité longitudinale 33 dans laquelle sont insérés des inserts 34. Les inserts 34 ont une forme complémentaire des inserts complémentaires 30. Par exemple ici, les inserts 34 ont une forme de mortaise, tandis que les inserts complémentaires ont une forme de tenon. Plus précisément, dans ce mode de réalisation, les inserts 34 et les inserts complémentaires 30 ont une section transversale rectangulaire. Les inserts complémentaires ont une section longitudinale en forme de T renversé, la barre du T 41 étant disposée du côté de la jonction intermédiaire, tandis que le pied du T 42 est du côté du caisson. L'insert 34 présente une forme complémentaire de l'insert complémentaire, c'est-à-dire qu'il comporte une face d'appui 43 contre laquelle vient s'appuyer la barre du T et une cavité 44 dans laquelle vient s'encastrer le pied du T. L'insert 34 présente un trou fileté tandis que l'insert complémentaire présente chacun un trou lisse. Le trou fileté et le trou lisse sont longitudinaux et ils traversent l'insert 34 et l'insert complémentaire en leur milieu. Ces trous sont destinés à recevoir un goujon permettant de solidariser l'insert 34 et l'insert complémentaire 30.

Les inserts 34 sont également prisonniers de la mousse 35 et ils sont disposés de telle sorte que, lorsque la jonction 23 et le caisson 25 sont mis bout à bout, chaque insert 34 s'emboîte dans un insert complémentaire 30. La mousse peut également recouvrir la face 39 ou 40 de chaque insert de façon à augmenter l'emprisonnement des inserts dans la mousse. Dans le cas où la mousse recouvre la face avant de chaque insert, l'épaisseur e de mousse sur chaque face avant 39 ou 40 est relativement faible et constante de sorte que la mousse reproduise la forme de la face avant de l'insert.

La fixation de la jonction 23 et du caisson 25 est représentée plus précisément sur la figure 5. Une figure symétrique pourrait être utilisée pour représenter la fixation de la jonction 23 et du caisson 24.

Les extrémités 32 et 33 de la jonction et du caisson sont collées ensemble. Cet assemblage est ensuite sécurisé par vissage. Pour cela, une vis36 est vissée suivant une direction parallèle à l'axe longitudinal à travers l'insert complémentaire 30 et l'insert 34. Afin de pouvoir introduire la vis au centre de la face arrière de l'insert complémentaire 30, une cavité 37 est présente derrière la face arrière 38 de l'insert 30. Cette cavité est creusée à travers la paroi extérieure 27 du caisson ainsi que dans une partie de la mousse. Une fois la vis introduite dans les inserts, cette cavité est comblée pour éviter les ponts thermiques et les zones de fragilité mécanique.

Le corps de citerne selon l'invention est donc léger grâce à ses parois en matériau composite, simple à fabriquer et modulable, grâce à son découpage en tronçons, et en outre, il est suffisamment résistant pour supporter la pression et la charge des matériaux qu'il contient et pour transmettre les efforts de traction.

Naturellement, l'invention n'est pas limitée à l'exemple de réalisation ci-dessus, et diverses modifications du variantes peuvent être envisagées. En particulier, les tronçons peuvent être d'un seul type. Dans ce cas, les tronçons, sont tous des caissons qui présentent une extrémité longitudinale pourvue d'un insert et une autre extrémité longitudinale pourvue d'un insert complémentaire. Les caissons sont alors mis bout à bout et ils sont fixés directement les uns avec les autres. On peut également envisager de fixer deux tronçons successifs grâce à des boulons disposés perpendiculairement à l'axe longitudinal. Ce type de fixation est particulièrement bien adapté aux véhicules citernes non pressurisables, pour lesquels les parois ne contiennent pas de mousse. Dans ce cas, les extrémités longitudinales de ces caissons successifs peuvent se chevaucher suivant la direction longitudinale. Les extrémités peuvent alors être collées ensemble sur la zone sur laquelle elles se chevauchent et un système vis-écrou peut venir en renforcement de ce collage.

## Revendications

1. Véhicule citerne autoporté tracté comportant un corps de citerne (1) s'étendant suivant un axe longitudinal (2), pourvu d'une attache de traction (3) et supporté par au moins un train de roues (6), **caractérisé en ce que** le corps de citerne (1) comporte une pluralité de tronçons (7-19) comportant chacun au moins une paroi annulaire en matériau composite monolithique, les forces de traction étant transmises de l'attache de traction (3) au train de roues (6) par l'intermédiaire d'au moins deux des tronçons.

2. Véhicule citerne autoporté tracté selon la revendication 1, **caractérisé en ce que** les tronçons (7-19) en matériaux composites sont séparés suivant des plans perpendiculaires à l'axe longitudinal (2).

3. Véhicule citerne autoporté tracté selon l'une quelconque des revendications précédentes, **caractérisé en ce que** chaque tronçon est composé d'une structure sandwich, elle même constituée d'une paroi extérieure (27) en matériau composite et d'une paroi intérieure (26) en matériau composite, entre lesquelles est intercalée une mousse (28).

4. Véhicule citerne autoporté tracté selon la revendication précédente, **caractérisé en** le matériau composite comporte:
- un tissu de fibres constituées d'un matériau pris dans le groupe suivant : carbone, verre, carbure de silicium, aluminium, aramide, fibres végétales ;
- une matrice constituée d'un matériau pris dans le groupe suivant : résine polyester, résine vinylester, résine epoxyde résine phénolique, résine thermoplastiques, polypropylène, polyamide.

5. Véhicule citerné autoporté tracté selon l'une quelconque des revendications 3 ou 4, **caractérisé en ce que** les parois intérieure (26) et extérieure (27) comportent en outre un voile et une couche d'enduit gélifié recouvrant le tissu de fibres imprégné de résine.

6. Véhicule citerne autoporté tracté selon l'une quelconque des revendications précédentes, **caractérisé en ce que** les tronçons sont assemblés par collage et boulonnage.

7. Véhicule citerne autoporté tracté selon la revendication précédente, **caractérisé en ce que** le boulonnage est parallèle à l'axe longitudinaldu véhicule citerne.

8. Véhicule citerne autoporté tracté selon les revendications 3 et 6 ou 7, **caractérisé en ce que** chaque tronçon comporte deux extrémités longitudinales (31, 32, 33), des inserts (29, 30, 34) étant insérés dans la mousse (28, 35) de chacune des extrémités, les inserts de deux tronçons adjacents étant boulonnés entre eux.

9. Véhicule citerne autoporté tracté selon l'une quelconque des revendications précédentes, **caractérisé en ce que** le corps de citerne (1) comporte au moins deux types de tronçons différents:
- des caissons (8, 10, 12, 14, 16, 1 8, 24, 25), et
- des jonctions intermédiaires (9, 11, 13, 15, 17, 23),
les caissons et les jonctions intermédiaires étant disposés de telle sorte qu'une jonction intermédiaire se trouve entre deux caissons successifs, au moins une des jonctions intermédiaires étant porteuses d'une cloison (22) s'étendant suivant un plan perpendiculaire à l'axe longitudinal, la cloison formant une fermeture hermétique ou non entre deux-caissons.

10. Véhicule citerne autoporté tracté selon les revendications 8 et 9, **caractérisé en ce que** les caissons sont pourvus d'inserts (34), les jonctions étant pourvues d'inserts complémentaires (30) auxdite inserts des caissons et de cavités (37), chaque cavité étant placée derrière un insert complémentaire.

11. Véhicule citerne autoporté tracté selon l'une quelconque des revendications 9 ou 10, dans lequel le corps de citerne (1) comporte deux extrémités longitudinales (4, 5), **caractérisé en ce qu'**une jonction porteuse (7, 19) d'une cloison hermétique est placée à chaque extrémité longitudinale du corps de citerne.

12. Véhicule citerne autoporté tracté selon l'une quelconque des revendications 9 à 11, **caractérisé en ce qu'**au moins deux caissons (14, 18) sont identiques.

13. Véhicule citerne autoporté tracté selon l'une quelconque des revendications 9 à 12. **caractérisé en ce qu'**au moins un caisson (10, 16) comprend un trou d'homme (20, 21).

## Claims

1. Towed self-supported tanker vehicle comprising a tanker body (1) extending along a longitudinal axis (2), provided with a traction attachment (3) and supported by at least one wheel train (6), **characterised in that** the tanker body (1) comprises a plurality of sections (7-19) each comprising at least one annular wall made from monolithic composite material, the traction forces being transmitted from the traction attachment (3) to the wheel train (6) by means of at least two of the sections.

2. Towed self-supported tanker vehicle according to claim 1, **characterised in that** the sections (7-19) made from composite materials are separated along planes perpendicular to the longitudinal axis (2).

3. Towed self-supported tanker vehicle according to either one of the preceding claims, **characterised in that** each section is composed of a sandwich structure, itself consisting of an external wall (27) made from composite material and an internal wall (26) made from composite material, between which a foam (28) is interposed.

4. Towed self-supported tanker vehicle according to the preceding claim, **characterised in that** the composite material comprises:
- a fabric made from fibres consisting of material taken from the following group: carbon, glass, silicon carbide, aluminium, aramid and vegetable fibres;
- a matrix consisting of a material taken from the following group: polyester resin, vinylester resin, epoxy resin, phenolic resin, thermoplastic resin, polypropylene and polyamide.

5. Towed self-supported tanker vehicle according to either one of claims 3 or 4, **characterised in that** the internal (26) and external (27) walls also comprise a covering and a layer of gelled coating covering the resin-impregnated fibre fabric.

6. Towed self-supported tanker vehicle according to any one of the preceding claims, **characterised in that** the sections are assembled by adhesive bonding and bolting.

7. Towed self-supported tanker vehicle according to the preceding claim, **characterised in that** the bolting is parallel to the longitudinal axis of the tanker vehicle.

8. Towed self-supported tanker vehicle according to claims 3 and 6 or 7, **characterised in that** each section comprises two longitudinal ends (31, 32, 33), inserts (29, 30, 34) being inserted in the foam (28, 35) of each of the ends, the inserts of two adjacent sections being bolted together.

9. Towed self-supported tanker vehicle according to any one of the preceding claims, **characterised in that** the tanker body (1) comprises at least two different types of section:
- chambers (8, 10, 12, 14, 16, 18, 24, 25), and
- intermediate junctions (9, 11, 13, 15, 17, 23),
the chambers and intermediate junctions being arranged so that an intermediate junction is situated between two successive chambers, at least one of the intermediate junctions carrying a partition (22) extending in a plane perpendicular to the longitudinal axis, the partition forming a closure, hermetic or not, between two chambers.

10. Towed self-supported tanker vehicle according to claims 8 and 9, **characterised in that** the chambers are provided with inserts (34), the junctions being provided with inserts (30) complementary to the inserts of the chambers, and cavities (37), each cavity being placed behind a complementary insert.

11. Towed self-supported tanker vehicle according to either one of claims 9 or 10, wherein the tanker body (1) comprises two longitudinal ends (4, 5), **characterised in that** a junction (7, 19) carrying a hermetic partition is placed at each longitudinal end of the tanker body.

12. Towed self-supported tanker vehicle according to any one of claims 9 to 11, **characterised in that** at least two chambers (14, 18) are identical.

13. Towed self-supported tanker vehicle according to any one of claims 9 to 12, **characterised in that** at least one chamber (10, 16) comprises a manhole (20, 21).

## Patentansprüche

1. Selbsttragendes einen Tankkörper (1) umfassendes Tankzugfahrzeug (1), das sich an einer Längsachse (2) entlang erstreckt, mit einer Anhängerkupplung (3) versehen ist und von mindestens einem Radsatz (6) getragen wird, **dadurch gekennzeichnet, dass** der Tankkörper (1) eine Vielzahl von Teilstücken (7 bis 19) umfasst, die jeweils mindestens eine ringförmige Wand aus einem monolithischen Verbundmaterial umfassen, wobei die Zugkräfte von der Anhängerkupplung (3) über mindestens zwei der Teilstücke auf den Radsatz (6) übertragen werden.

2. Selbsttragendes Tankfahrzeug nach Anspruch 1, **dadurch gekennzeichnet, dass** die Teilstücke (7 bis 19) aus Verbundmaterialien an Ebenen entlang getrennt sind, die zur Längsachse (2) rechtwinklig sind.

3. Selbsttragendes Tankfahrzeug nach einem der vorhergehenden Ansprüche, **dadurch gekennzeichnet, dass** jedes Teilstück aus einer Sandwichstruktur besteht, die wiederum aus einer Außenwand (27) aus Verbundmaterial und aus einer Innenwand (26) aus Verbundmaterial besteht, zwischen denen ein Schaumstoff (28) eingelegt ist.

4. Selbsttragendes Tankfahrzeug nach dem vorhergehenden Anspruch, **dadurch gekennzeichnet, dass** das Verbundmaterial Folgendes umfasst:
- ein Gewebe aus Fasern, die aus einem Material bestehen, das aus der folgende Gruppe gewählt wird: Kohlenstoff, Glas, Siliziumcarbid, Aluminium, Aramid, Pflanzenfasern;
- ein Grundmaterial, das aus einem Material besteht, das aus der folgenden Gruppe gewählt wird: Polyesterharz, Vinylesterharz, Epoxidharz, Phenolharz, Thermoplast, Polypropylen, Polyamid.

5. Selbsttragendes Tankfahrzeug nach einem der Ansprüche 3 oder 4, **dadurch gekennzeichnet, dass** die Innenwand (26) und die Außenwand (27) ferner eine Abdeckung und eine gelierte Glättschicht, die das mit Harz imprägnierte Fasergewebe bedeckt, umfassen.

6. Selbsttragendes Tankfahrzeug nach einem der vorhergehenden Ansprüche, **dadurch gekennzeichnet, dass** die Teilabschnitte durch Kleben und Schraubverbindung zusammengefügt werden.

7. Selbsttragendes Tankfahrzeug nach dem vorhergehenden Anspruch, **dadurch gekennzeichnet, dass** die Schraubverbindung zur Längsachse des Tankfahrzeugs parallel ist.

8. Selbsttragendes Tankfahrzeug nach Anspruch 3 und 6 oder 7, **dadurch gekennzeichnet, dass** jedes Teilstück zwei Längsenden (31, 32, 33) umfasst, wobei Einsatzteile (29, 30, 34) in den Schaumstoff (28, 35) jedes der Enden eingefügt sind, wobei die Einsatzteile von zwei angrenzenden Teilstücken miteinander verschraubt sind.

9. Selbsttragendes Tankfahrzeug nach einem der vorhergehenden Ansprüche, **dadurch gekennzeichnet, dass** der Tankkörper (1) mindestens zwei verschiedene Teilstückarten umfasst:
- Behälter (8, 10, 12, 14, 16, 18, 24, 25), und
- Zwischenverbindungsstellen (9, 11, 13, 15, 17, 23),
wobei die Behälter und die Zwischenverbindungsstellen derart angeordnet sind, dass sich eine Zwischenverbindungsstelle zwischen zwei aufeinanderfolgenden Behältern befindet, wobei mindestens eine der Zwischenverbindungsstellen eine Trennwand (22) trägt, die sich an einer Ebene entlang erstreckt, die zur Längsachse rechtwinklig ist, wobei die Trennwand einen hermetischen oder nicht hermetischen Verschluss zwischen zwei Behältern bildet.

10. Selbsttragendes Tankfahrzeug nach Anspruch 8 und 9, **dadurch gekennzeichnet, dass** die Behälter mit Einsatzteilen (34) versehen sind, wobei die Verbindungsstellen mit Einsatzteilen (30) versehen sind, welche die Einsatzteile der Behälter und Hohlräume (37) ergänzen, wobei jeder Hohlraum hinter einem ergänzenden Einsatzteil angeordnet ist.

11. Selbsttragendes Tankfahrzeug nach einem der Ansprüche 9 oder 10, wobei der Tankkörper (1) zwei Längsenden (4, 5) umfasst, **dadurch gekennzeichnet, dass** eine Verbindung (7, 19), die eine hermetische Trennwand trägt, an jedem Längsende des Tankkörpers angeordnet ist.

12. Selbsttragendes Tankfahrzeug nach einem der Ansprüche 9 bis 11, **dadurch gekennzeichnet, dass** mindestens zwei Behälter (14, 18) identisch sind.

13. Selbsttragendes Tankfahrzeug nach einem der Ansprüche 9 bis 12, **dadurch gekennzeichnet, dass** mindestens ein Behälter (10, 16) eine Einstiegöffnung (20, 21) umfasst.
